# EUROPEAN PATENT SPECIFICATION

(11) **EP 1 521 908 B1**
(45) Date of publication and mention of the grant of the patent: **07.02.2007**
(21) Application number: 03740794.7
(22) Date of filing: 11.07.2003
(51) Int. Cl.: F02D 41/40, F02M 47/02

(54) **CONTROL METHOD**
STEUERUNGSVERFAHREN
PROCEDE DE REGULATION

(30) Priority: 13.07.2002 GB 0216347
(43) Date of publication of application: 13.04.2005
(73) Proprietor: Delphi Technologies, Inc., Troy, MI 48007 (US)
(72) Inventor: Harcombe, Anthony Thomas, Surrey TW10 5DZ (GB); Dodds Andrew, Oxfordshire OX39 4QE (GB)
(74) Representative: Hopley, Joanne Selina
(86) International application number: PCT/GB2003/003015
(87) International publication number: WO 2004/007934

(56) References cited:
- EP-A- 0 992 675
- EP-A- 1 065 368
- EP-A- 1 081 373
- GB-A- 2 310 889

## Description

This invention relates to a control method for a fuel injection system for use in delivering fuel under high pressure to a cylinder of a compression ignition internal combustion engine.

In order to ensure that the level of emissions produced by an engine falls within an acceptable level, it is desirable to be able to control the fuel pressure at which fuel is injected to a cylinder of an engine independently of the timing of fuel delivery. It is known to achieve this by using separate valves to control the injection pressure and the timing of injection, a spill valve and a nozzle control valve respectively.

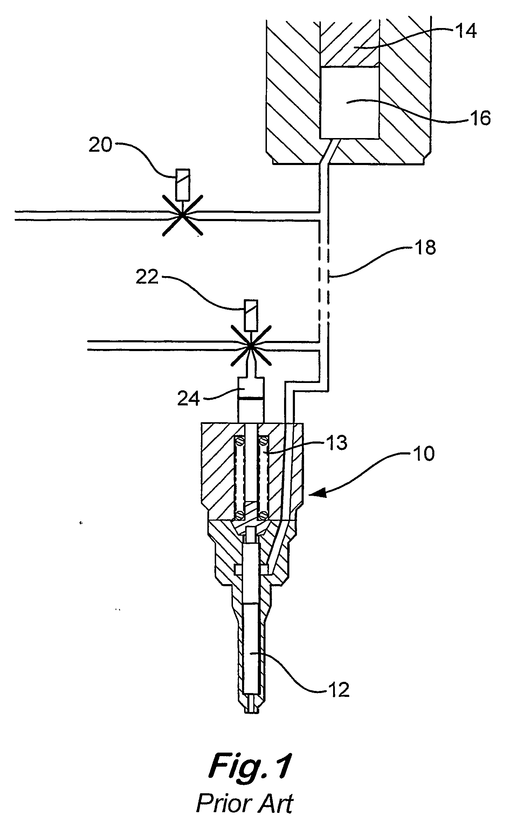

EP 0823549A1 and EP 1065368A2 describe a known fuel injection system of the aforementioned type, illustrated schematically in Figure 1. The system includes an injection nozzle, referred to generally as 10, including a valve needle 12, which is urged towards a valve needle seating by a spring load 13. The valve needle 12 is engageable with the seating to control fuel delivery between a nozzle delivery chamber (not shown) and an injection nozzle outlet to the engine. The system also includes a pump arrangement including a pumping plunger 14, which is driven by a mechanical drive arrangement (not shown) to pressurise fuel within a pump chamber 16 in communication with the nozzle 10 through a high pressure supply line 18. A spill control valve 20 is operable to control communication between the pump chamber 16 and a low pressure drain (not shown), and hence controls the timing of commencement of fuel pressurisation within the pump chamber 16. A nozzle control valve 22 is operable to control communication between a pressure control chamber 24 and the low pressure drain, and is operable to control the timing of commencement of injection. If the spill control valve 20 is open to low pressure, plunger movement causes fuel to be drawn into and spilled back through the valve 20 to low pressure, but if the spill valve 20 is closed, plunger movement in a direction to reduce the volume of the pump chamber 16 causes fuel pressure within the pump chamber 16 to increase. If the nozzle control valve 22 is closed, fuel pressure within the control chamber 24 is increased due to a continuous supply of fuel from the high pressure supply line 18, but when the nozzle control valve 22 is opened, the control chamber 24 communicates with the low pressure drain and fuel pressure within the control chamber 24 is reduced. When the desired fuel pressure has been reached within the pump chamber 16, the nozzle control valve 22 can therefore be opened to relieve fuel pressure in the control chamber 24, causing the valve needle 12 to be lifted under a hydraulic force, away from its seating, to commence injection.

The mechanical drive arrangement for the plunger 14 typically includes a driven cam (not shown) and a roller which rides over the surface of the cam as it rotates. The roller is co-operable with a drive member coupled to the plunger, which applies a drive force to the plunger 14 to perform a pumping stroke during which the plunger 14 is driven in a direction to reduce the volume of the pump chamber 16. As the roller rides over the cam lobe, a return spring serves to drive the plunger return stroke, during which the plunger moves in a direction to increase the volume of the pump chamber.

It has been observed that the drive train components tend to separate at the end of injection, and as the components are subsequently brought into contact an undesirable level of mechanical noise may be generated.

It is one object of the present invention to provide a control method for a fuel injection system generally of the aforementioned type, in which the problem of mechanical noise is alleviated.

There is also an increasing need in the automotive industry to reduce emissions levels, for example NOx and smoke levels, both for environmental purposes and to improve engine efficiency, and it is a further object of the invention to provide a control method which provides beneficial emissions levels.

According to a first aspect of the present invention, there is provided a control method for a fuel injection system having a spill valve, a nozzle control valve and a valve needle which is engageable with a seating to control fuel injection, the method comprising:
applying a first drive current signal to the spill valve to cause the spill valve to move into a closed state and applying a second drive current signal to the nozzle-conttol valve to cause the nozzle control valve to move to an open state, thereby to lift the valve needle from the seating to initiate a main injection of fuel, followed by
modifying the first drive current signal applied to the spill valve so as to cause the spill valve to move from the closed state to an open state during a spill valve
opening period and modifying the second drive current signal applied to the nozzle control valve to cause the nozzle control valve to move from the open state to a closed state during the spill valve opening period, so as to urge the valve needle towards its seating to terminate the main injection of fuel.

One advantage of the present invention is that the valve needle is caused to close whilst the spill valve is moving from its closed state to its open state. The rate of flow of fuel through the spill valve to low pressure (i.e. the "spill rate"), and thus the rate of decrease in injection pressure at the end of injection is therefore reduced due to the reflected or positive pressure wave generated by closure of the valve needle. Thus, mechanical noise generated as a result of drive load overshoot, and separation and re-contact of the associated pump drive components, can be reduced or avoided.

In a particularly preferred embodiment, the method includes switching the first drive current signal off to provide a first actuation pulse so as to initiate the spill valve opening period and switching the first drive current signal on and then off again to provide a second actuation pulse prior to termination of the spill valve opening period.

The second actuation pulse for the spill valve during the spill valve opening period (i.e. during pressure decay) has the beneficial effect of reducing engine noise further.

The method may further include monitoring a glitch detection signal indicative of spill valve opening and modifying the first drive current signal to provide the second actuation pulse at a time, relative to termination of the spill valve opening period, in dependence upon the glitch detection signal. The glitch detection signal may be monitored periodically during injection events, so that it is implemented occasionally during injection events when the second actuation pulse is not provided.

In a preferred embodiment, the first drive current signal is switched off to cause the spill valve to move to its open state at a time of between 0.05 and 2 milliseconds before the second drive current signal is switched off to cause the nozzle control valve to move to its closed state, and more preferably the first drive current signal is switched off between 0.1 and 1 millisecond before the second drive current signal is switched off. This particular relative timing relationship between actuation of the spill and nozzle control valves to terminate an injection event is found to provide a suitable compromise between (i) a lower rate of decrease of injection pressure at the end of injection to minimise mechanical noise from the pump drive components (ii) a low enough fuel delivery quantity at the end of injection to minimise smoke emission levels and (iii) a high enough injection pressure to prevent nozzle blowback.

According to a second aspect of the present invention there is provided a control method for delivering a main injection of fuel followed by a post injection of fuel, the method comprising:
actuating a spill valve and a nozzle control valve to initiate the main injection of fuel,
terminating the main injection of fuel by (i) actuating the spill valve at a first time to cause the spill valve to move into an open state followed by (ii) actuating a nozzle control valve at a second time to cause the nozzle control valve to move into a : closed state,
subsequently actuating the spill valve at a third time to cause the spill valve to move from its open state to a closed state, and
initiating the post injection of fuel by actuating the nozzle control valve to move into an open state, whereby the difference between the first and third times is selected to provide a relatively high pressure post injection of fuel so as to reduce smoke emissions levels.

It has been found to be desirable to provide a main injection of fuel followed by a post injection of fuel to improve emissions.

The present invention provides an advantage over methods whereby only the nozzle control valve is activated to initiate a main and a post injection of fuel, for which structural problems arise due to stresses within the apparatus caused by extremely high pressure levels.

In a preferred embodiment, the spill valve is actuated to move between its open and closed states by modifying a spill valve drive current signal. Preferably, the relative timing between opening and closure of the spill valve is selected to ensure the post injection pressure is at least 1700 bar.

In a further preferred embodiment, the relative timing is selected to ensure the post injection pressure is at least 2000 bar.

It will be appreciated that preferred and/or optional features of the first aspect of the invention are equally applicable to the second aspect of the invention.

The invention will now be described, by way of example only, by reference to the accompanying drawings in which:
Figure 1 is a schematic illustration of a known fuel injection system,
Figure 2 is a schematic graph to illustrate the drive load characteristic of a known control method for the fuel injection system in Figure 1, and for which the origin of mechanical noise is identifiable,
Figure 3 is a schematic graph to illustrate the drive load characteristic of an alternative known control method for the fuel injection system in Figure 1, and for which the origin of mechanical noise is also identifiable,
Figure 4 shows (a) the drive current signal for the spill valve, (b) spill valve lift, (c) the injection pressure/drive load characteristic, (d) the drive current signal for the nozzle control valve, (e) nozzle control valve lift and (f) valve needle lift for a control method in accordance with the present invention,
Figure 5 shows experimental results for (a) cylinder pressure, (b) injection pressure and (c) needle lift using the control method in Figure 4,
Figure 6 shows experimental results for (a) cylinder pressure, (b) injection pressure, (c) needle lift, (d) spill valve drive current signal and (e) nozzle control valve drive current signal for an alternative embodiment of the control method,
Figure 7 shows a table of results corresponding to Figure 6 to illustrate the smoke emissions benefits obtained using the control method illustrated in Figure 6, and
Figure 8 shows experimental results for (a) spill valve drive current signal and (b) injection pressure for an alternative embodiment of the control method.

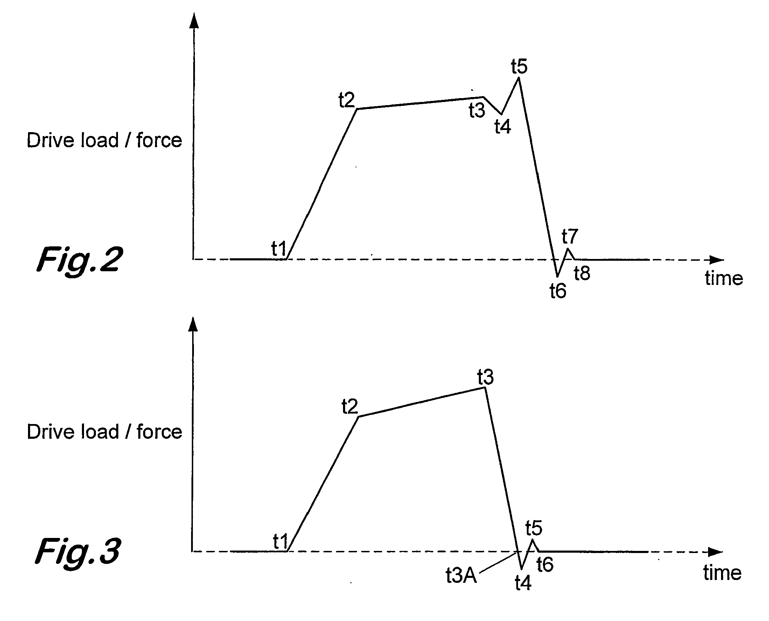

Figures 2 and 3 show the drive load characteristic during an injection event using one known control method for the fuel injection system in Figure 1. Between times t1 and t2, the spill valve 20 is closed and fuel pressure within the pump chamber 16 increases. Between times t2 and t3, the nozzle control valve 22 is opened to reduce fuel pressure within the control chamber 24, and the valve needle 12 starts to lift from its seating due to high fuel pressure within the delivery chamber which acts against the spring load 13, and injection commences. Between times t3 and t4 the nozzle control valve 22 is closed, and the flow of high pressure fuel from the supply line 18 into the control chamber 24 serves to urge the valve needle into engagement with its seating (at time t4) to terminate injection.

Between times t4 and t5, pressurisation of the control chamber 24 continues due to the continuous flow of high pressure fuel from the supply line 18, and the mechanical drive load increases. At time t5, the spill valve 20 is opened, so that fuel pressure within the pump chamber 16 and the supply line 18 is reduced, and a point is reached, just prior to time t6, at which the drive load is negative (i.e. herein referred to as "drive load overshoot"). At time t6 in the cycle the pump components are therefore caused to separate. Mechanical noise generated as a result of the drive components re-contacting one another as the drive load oscillates about zero (between times t6 and t7) is undesirable.

Using this injection control method, it will be appreciated that the end of injection is initiated by actuating the nozzle control valve 22 to increase pressure within the control chamber 24.

An alternative control method will now be described with reference to Figure 3, which shows the drive load during an injection cycle in which injection is terminated by actuating the spill valve 20. As described previously, between times t1 and t2 the spill valve 20 is closed and fuel pressure within the pump chamber 16 increases. Between times t2 and t3 the nozzle control valve 22 is opened to reduce fuel pressure within the control chamber 24, and the valve needle 12 starts to lift from its seating to commence injection. At time t3, the spill valve 20 is opened to reduce the pressure of fuel delivered to the nozzle through the supply line 18, so that the force acting on the needle 12 is reduced and the valve needle 12 is urged against its seating by the nozzle spring load 13. There is a rapid decrease in drive load when the spill valve 20 is opened and, due to the relatively high rate of flow of spilled fuel to low pressure, the drive load overshoots (time t4). The valve needle is seated at time t3A. As described previously, the drive load overshoots until at time t4 the drive train components are caused to separate. Subsequent re-contact of the drive train components (between time t4 and time t5) gives rise to mechanical noise, which continues as the drive load oscillates about zero between times t4 and t6, and possibly beyond.

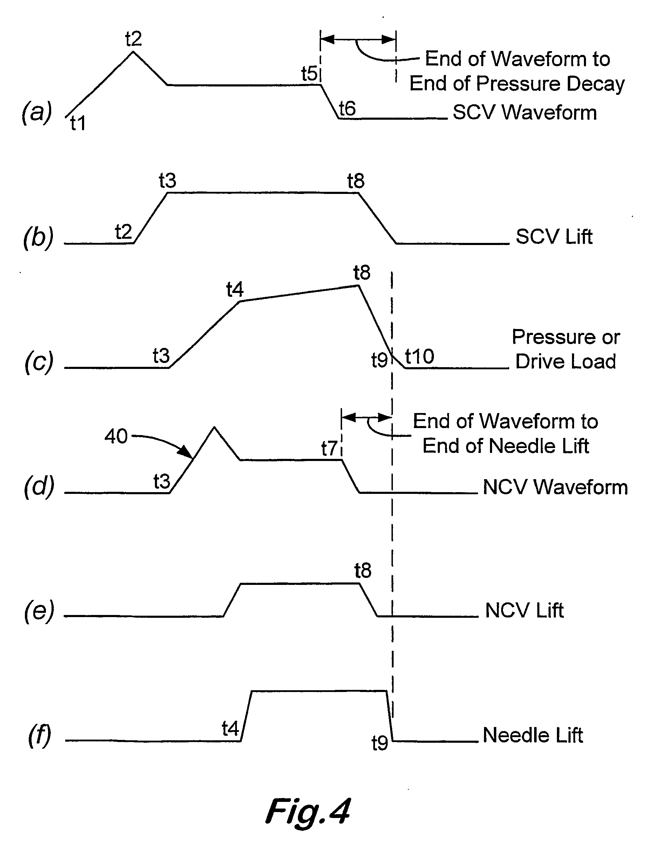

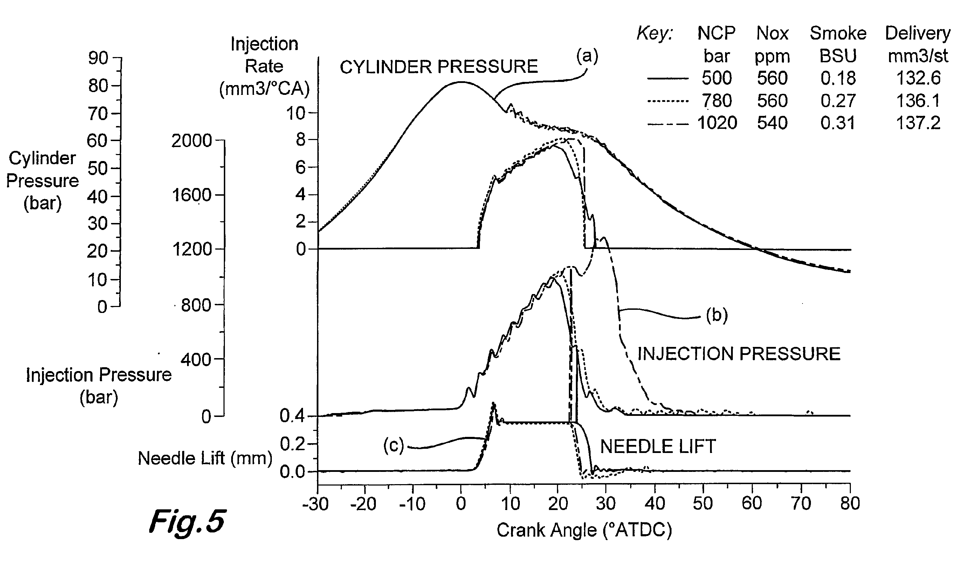

One aspect of the present invention, referred to as "synchronous end of injection" addresses the aforementioned problem and alleviates the disadvantageous effects of mechanical noise by near-synchronising operation of the spill valve 20 and the nozzle control valve 22 to terminate injection. Figure 4 shows (a) the drive current signal for the spill valve 20, (b) the spill valve lift, (c) the drive load (as shown in Figures 2 and 3), (d) the drive current signal for the nozzle control valve 22, (e) the nozzle control valve lift and (f) the valve needle lift, for the synchronous end of injection method. Figure 5 shows measurements of (a) cylinder pressure, (b) injection pressure and (c) valve needle lift using the synchronous end of injection method of Figure 4.

At the start of an injection cycle, a drive current signal 30 for the spill valve 20 is switched on and ramps between times t1 to t2 to a first relatively high current level. The spill valve 20 is moved into its fully closed state at time t3, and fuel pressurisation within the pump chamber 16 commences, as illustrated in Figure 4(c). At time t3, a drive current signal 40 is applied to the nozzle control valve 22 to lift (open) the nozzle control valve 22, thereby causing fuel pressure within the control chamber 24 to be reduced until at time t4 the valve needle 12 starts to lift from the seating, against the spring load 13, to commence injection.

Termination of the fuel injection event is achieved in the following manner. At time t5, the drive current signal 30 is switched off, defining a drive signal off-pulse, and a short time later (time t8) the spill valve 20 starts to move towards its open state. At time t7, just after the drive current signal 30 for the spill valve 20 is switched off, a drive current signal 40 for the nozzle control valve 22 is switched off and the nozzle control valve 22 starts to move to its closed state (time t8) to re-establish high fuel pressure within the control chamber 24. The nozzle control valve 22 is therefore actuated within a spill valve opening period. The near-synchronisation of opening of the spill valve 20 and closure of the nozzle control valve 22 to terminate injection (time t9) has the effect that the drive load decays to zero, but that oscillations about zero and drive load overshoot are avoided. This advantageous effect is illustrated in Figure 4(c) between times t9 and t10.

Immediately after injection has been terminated, between times t9 and t10, the rate of flow of fuel through the open spill valve 20 to low pressure will be reduced compared to that using the conventional methods (Figure 2 and 3), due to the additional positive (reflected) pressure wave generated upon closure of the valve needle 12 which occurs as the spill valve 20 is still moving towards its fully open position. It is therefore an important feature of the invention that at the moment the valve needle 12 actually closes (time t9) at the end of pressure decay, the spill valve 20 is still moving towards its open position (see Figure 4(b)) i.e. during spill. By controlling the spill and nozzle control valves 20, 22 such that they are phased in this manner, the problems associated with drive load overshoot, and hence mechanical noise, may be alleviated. In practice, the optimum relative timing between actuation of the valves will be determined by parameters of the system, such as actuator delays and pipe lengths and volumes. Conveniently, the relative timing of switching of the valves 20, 22 to terminate injection may be determined by reference to pre-calibrated data, using look up tables or data maps.

In an alternative embodiment, the rate of spill through the open spill valve 20 to terminate injection may be modified further by reconfiguring certain flow passages/restrictions, thereby further reducing the rate of decay of pressure between times t9 and t10 and, hence, further reducing mechanical noise generated by the drive train components at the end of injection.

A further aspect of the invention permits the smoke emissions level to be reduced at the end of an injection event by selecting particular drive current signal timings for the spill valve 20 and the nozzle control valve 22. It has been found that for lower values of needle lift (e.g. at the end of injection) the associated fuel spray form is less desirable. Thus, by minimising the fuel quantity and the injection pressure at such lower lift values, the smoke level in the exhaust steam can be reduced. It is important, however, that the injection pressure is maintained at a sufficiently high level during closure of the valve needle to avoid blowback of the cylinder gases into the nozzle.

Additionally, as described previously, it is beneficial to reduce the rate of decrease of injection pressure (times t9 to t10 in Figure 4(c)) at the end of injection so as to reduce the effects of mechanical noise generated by the drive train components. To compromise between achieving a relatively low smoke emission level, no nozzle blowback and low mechanical noise, it has been found that the spill valve drive current signal 30 should be switched off (i.e. to open the spill valve 20) between 0.1 and 1 millisecond before the nozzle control valve drive current signal 40 is switched off to close the nozzle control valve 22 and, thus, seat the valve needle 12.

It is also desirable in some operating conditions for a pilot injection of fuel to be delivered to the engine, prior to a main injection, or for a main injection of fuel to be followed by a post injection. For example, the use of a pilot injection prior to a main injection can be used to reduce combustion noise, and the use of a post injection shortly after a main injection has combustion benefits for soot reduction.

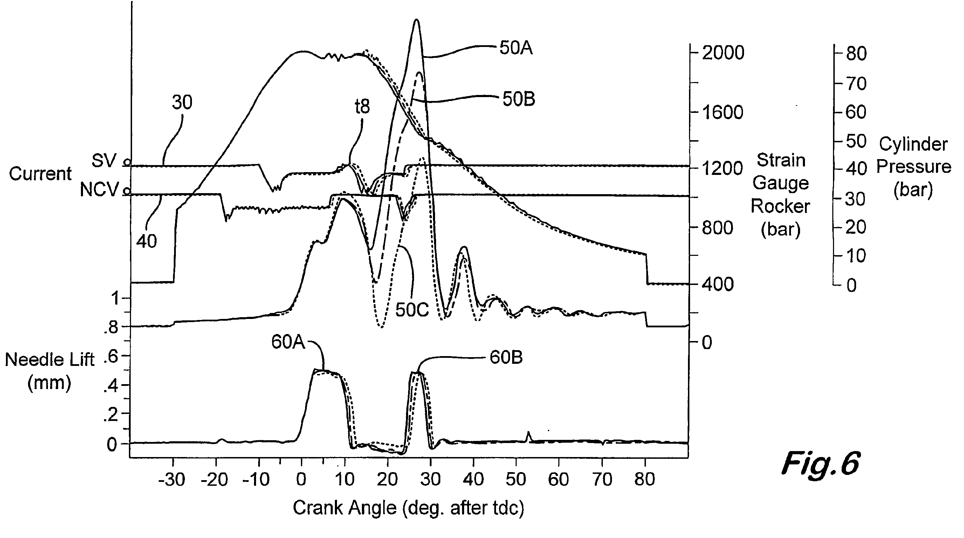

In order to optimise the combustion benefits of applying a main injection followed by a post injection, it is desirable to vary the injection pressure for the post injection of fuel such that the post injection pressure is high. This may be achieved using the method illustrated in Figure 6, which shows the drive current signals 30, 40 for the spill valve 20 and the nozzle control valve 22 respectively. The injection pressure is illustrated by three traces 50A, 50B and 50C, having decreasing peak injection pressure values. The bottom trace in Figure 6 illustrates valve needle lift, and shows a main injection (60A) of fuel followed by a post injection (60B) within the same injection cycle.

To terminate the main injection of fuel prior to the post injection, the spill drive current signal 30 is switched off (corresponding to time t8, as shown in Figure 4(b)) to move the spill valve 20 towards its open state. The nozzle control valve 22 is in its closed state at the end of the main injection event. It will be appreciated that the drive current signals 30, 40 in Figure 6 are shown to be switched negative to activate the respective valve, but equally the electrical connections to the valves may be configured such that the drive current signals 30, 40 are switched positive to actuate the respective valves.

To initiate the post injection of fuel, the drive current signal 30 for the spill valve 20 is switched on to reduce the rate at which fuel can escape from the supply line 18 and pump chamber 16 to low pressure, and fuel pressure in the nozzle delivery chamber starts to increase as pumping continues. When the post injection of fuel is required, the drive current signal 40 is switched on to move the nozzle control valve 22 into its open state to relieve fuel pressure within the control chamber 24, and the valve needle 12 is caused to lift again.

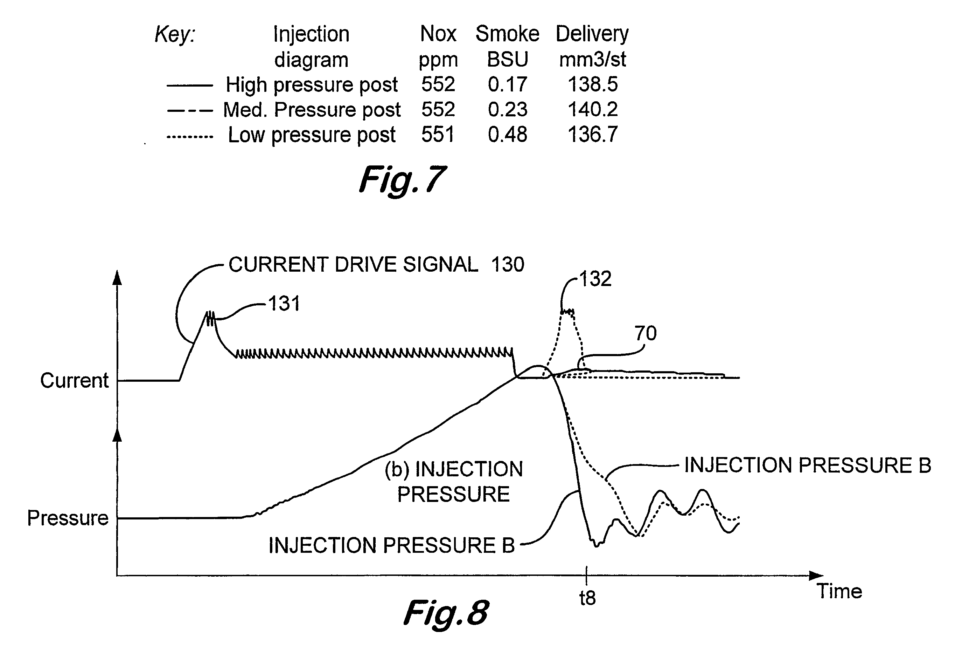

As can be seen from the three traces 50A, 50B and 50C, the period of time after termination of the main injection at which the drive current signal 30 for the spill valve 20 is switched on to cause the valve 20 to start to close determines the rate of decay of fuel pressure between the main injection and the post injection, and thus determines the injection pressure for the post injection event. It has been found that there are considerable benefits for emissions if the post injection pressure is high, and by careful selection of the relative timing between opening of the spill valve 20 to terminate the main injection event and closure of the spill valve 20 for the post injection event, a high pressure post injection of fuel can be achieved. By way of example, Figure 7 shows numerical test results corresponding to Figure 6, from which it can be seen that the level of smoke in the exhaust emissions is considerably reduced for higher post injection pressures. For a post injection pressure greater than 1700 bar (50B), the level of emitted smoke is greatly reduced compared with a lower post injection pressure (50C), and a post injection pressure in excess of 2000 bar (50A) improves the smoke emissions level further. It can also be seen from Figure 6 that only for trace C is the injection pressure reduced to substantially zero between the main and post injections of fuel.

It has previously been proposed to achieve a main injection of fuel followed by a post injection of fuel by operating only the nozzle control valve 22. Using this technique, the spill valve 20 remains closed between the main and the post injection and instead just the nozzle control valve 22 is opened to relieve fuel pressure in the control chamber 24 to initiate the post injection of fuel, and is closed at the end of post injection to re-establish high fuel pressure in the control chamber 24. As a consequence of using this method, however, the level of injection pressure in the post injection is not under independent control and may be excessively high, especially if wider separation times between the main and post injection events are required. The benefit of the present invention is that the injection pressure can be made independent of the separation between the main and post injection.

Figure 8 illustrates experimental results achieved using a further alternative embodiment of the invention, in which the spill valve drive signal 130 includes two pulses, one to initiate spill valve opening and an additional pulse that is applied later, but still during the spill valve opening phase. In the following example only the termination of a main injection of fuel is described, although it will be appreciated that a subsequent post-injection of fuel may follow, as described previously. It will be appreciated that the spill valve drive signal 130 in Figure 8 is switched off to open, as in the Figure 6 example, although the current axis is inverted compared to that in Figure 6.

The spill valve drive signal 130 is initially switched off when it is required to initiate pressure decay, causing the spill valve 20 to start to move towards its open state. The initial spill valve actuation pulse is identified by pulse 131 in Figure 8. At time t8 (as described previously), the spill valve 20 is fully open. It is a particular feature of this embodiment that the spill valve drive signal 130 is modified during the spill valve opening phase by switching it on, and then off again, prior to full opening of the spill valve 20. This is indicated by the presence of a second spill valve actuation pulse, identified as 132.

As before, the nozzle control valve drive signal is de-actuated to cause the nozzle control valve 22 to close during the spill valve opening phase (i.e. synchronised end of injection), prior to full opening of the spill valve 20. For simplicity the nozzle control valve drive signal is not shown in Figure 8. The additional spill valve actuation pulse 132 occurs during the spill valve opening period, and thus substantially simultaneously with actuation of the nozzle control valve 22.

With reference to Figure 8, the time at which the additional actuation pulse 132 is provided may be determined by means of a glitch detection technique. Glitch detection techniques are well known in fuel injection control methods and will be familiar to those skilled in this field, for example see EP 0857251. Such methods are used to provide an accurate indication of when the spill valve 20 reaches a fully open (or closed) state.

In practice, the additional spill valve actuation pulse 132 will be implemented for most, but not all, injection events. For those events where it is not applied, a current glitch or discontinuity in the current signal can be detected to provide an indication of the correct time at which the additional spill valve actuation pulse 132 should be applied for subsequent events. The current signal glitch detection discontinuity is identified at 70 in the current signal shown as a solid line in Figure 8 (i.e. without the second pulse 132, and similar to drive current signal 30 in Figure 6). It can be seen that for events where the second actuation pulse 132 is applied, it is timed to occur just prior to the point at which the glitch detection discontinuity 70 occurs.

The benefit of providing an additional spill valve actuation pulse 132 during the spill valve opening period can be seen by comparing the injection pressure for the two-pulse drive signal 130, represented by "Injection Pressure A", with the "Injection Pressure B" obtained for the single pulse drive signal 30. It can be seen that the provision of the additional pulse 132 results in a reduction in the injection pressure decay rate compared to that obtained for the single pulse drive signal 30, therefore providing a noise benefit upon termination of injection.

The glitch detection method may be implemented by means of an adaptive control algorithm. Alternatively, data maps or look-up tables may be used.

As an alternative to using the glitch detection technique, data mapping techniques may be used to determine the correct timing of the second actuation pulse 132.

Although the fuel system shown in Figure 1 shows the spill valve 20 and the nozzle control valve 22 arranged remotely from one another, the invention is equally applicable to unit pump injection systems in which the spill and nozzle control valves are arranged within a common housing, or in which the spill valve and the nozzle control valve functions are under the control of a common actuator.

## Claims

1. A control method for a fuel injection system having a spill valve (20), a nozzle control valve (22) and a valve needle (12) which is engageable with a seating to control fuel injection, the method comprising:
applying a first drive current signal (30; 130) to the spill valve (20) to move the spill valve (20) into a closed state and applying a second drive current signal (40) to the nozzle control valve (22) to move the nozzle control valve (22) to an open state, thereby to lift the valve needle (12) from the seating to initiate a main injection of fuel, and
modifying the first drive current signal (30; 130) applied to the spill valve (20) so as to move the spill valve (20) from the closed state to an open state during a spill valve opening period followed by modifying the second drive current signal (40) applied to the nozzle control valve (22) to move the nozzle control valve (22) from the open state to a closed state during the spill valve opening period, so as to urge the valve needle (12) towards its seating to terminate the main injection of fuel.

2. The control method as claimed in claim 1, including switching the first drive current signal (130) off to provide a first actuation pulse (131) to initiate the spill valve opening period and switching the first drive current signal (130) on and then off again to provide a second actuation pulse (132) prior to termination of the spill valve opening period.

3. The control method as claimed in claim 2, including monitoring a glitch detection signal indicative of spill valve opening and modifying the first drive current signal (130) to provide the second actuation pulse (132) at a time, relative to termination of the spill valve opening period, in dependence upon the glitch detection signal.

4. The control method as claimed in claim 3, including monitoring said glitch detection signal periodically during injection events.

5. The control method as claimed in any of claims 1 to 4, wherein the first drive current signal (30; 130) is modified to cause the spill valve (20) to move towards its open state at a time (t6) of between 0.05 and 2 milliseconds before a time (t7) at which the second drive current signal (40) is modified to cause the nozzle control valve (22) to move towards its closed state.

6. The control method as claimed in claim 5, wherein the first drive current signal (30; 130) is modified between 0. 1 and 1 millisecond before the second drive current signal (40) is modified.

7. The control method as claimed in any of claims 1 to 6, wherein the second drive current signal (40) is switched on to move the nozzle control valve (22) to its open state.

8. The control method as claimed in any of claims 1 to 6, wherein the second drive current signal (40) is switched off to move the nozzle control valve (22) to its open state.

9. A control method for delivering a main injection of fuel followed by a post injection of fuel, the method comprising:
actuating a spill valve (20) and a nozzle control valve (22) to initiate the main injection of fuel,
terminating the main injection of fuel by (i) actuating the spill valve (20) at a first time to cause the spill valve (20) to move to an open state followed by (ii) actuating a nozzle control valve (22) at a second time to cause the nozzle control valve (22) to move into a closed state,
subsequently actuating the spill valve (20) at a third time to cause the spill valve (20) to move from its open state to a closed state, and
initiating the post injection of fuel by actuating the nozzle control valve (22) to move into an open state, whereby the difference between the first and third times is selected to provide a relatively high pressure post injection of fuel so as to reduce smoke emissions levels.

10. The control method as claimed in claim 9, whereby the spill valve (20) is actuated to move between its open and closed states by modifying a spill valve drive current signal (30).

11. The control method as claimed in claim 10, wherein the relative timing between opening and closure of the spill valve (20) is selected to ensure the post injection pressure is at least 1700 bar.

12. The control method as claimed in claim 11, wherein the relative timing between opening and closure of the spill valve (20) is selected to ensure the post injection pressure is at least 2000 bar.

## Patentansprüche

1. Steuerungsverfahren für ein Kraftstoffeinspritzsystem mit einem
Überströmventil (20), einem Düsensteuerventil (22) und einer Ventilnadel (12), die an einem Dichtsitz angreifen kann, um eine Kraftstoffeinspritzung zu steuern, wobei das Verfahren umfasst:
ein Anlegen eines ersten Ansteuerungsstromsignals (30, 130) an das Überströmventil (20), um das Überströmventil (20) in einen geschlossenen Zustand zu bewegen, und ein Anlegen eines zweiten Ansteuerungsstromsignals (40) an das Düsensteuerventil (22), um das Düsensteuerventil (22) in einen offenen Zustand zu bewegen, wodurch die Ventilnadel (12) von dem Dichtsitz abgehoben wird, um eine Haupteinspritzung von Kraftstoff zu beginnen, und
ein Modifizieren des ersten Ansteuerungsstromsignals (30, 130), das an dem Überströmventil (20) anliegt, so dass sich das Überströmventil (20) während einer Überströmventil-Öffnungsphase von dem geschlossenen Zustand in einen offenen Zustand bewegt, gefolgt durch ein Modifizieren des zweiten Ansteuerungsstromsignals (40), das an dem Düsensteuerventil (22) anliegt, um das Düsensteuerventil (22) während der Überströmventil-Öffnungsphase von dem offenen in einen geschlossenen Zustand zu bewegen, so dass die Ventilnadel (12) in Richtung ihres Dichtsitzes gedrängt wird, um die Haupteinspritzung von Kraftstoff zu beenden.

2. Steuerungsverfahren nach Anspruch 1, beinhaltend ein Ausschalten des ersten Ansteuerungsstromsignals (130), um einen ersten Betätigungspuls (131) für ein Beginnen der Überströmventil-Öffnungsphase zu schaffen, und ein Einschalten des ersten Ansteuerungsstromsignals (130) und ein nachfolgendes Wiederausschalten, um einen zweiten Betätigungspuls (132) vor dem Beenden der Überströmventil-Öffnungsphase zu schaffen.

3. Steuerungsverfahren nach Anspruch 2, beinhaltend ein Anzeigen eines Störimpuls-Erfassungssignals, hinweisend auf ein Öffnen des Überströmventils und ein Modifizieren des ersten Ansteuerungsstromsignals (130), um zu einem Zeitpunkt relativ zu der Beendigung der Überströmventil-Öffnungsphase in Abhängigkeit von dem Störimpuls-Erfassungssignal den zweiten Betätigungsimpuls (132) vorzusehen.

4. Steuerungsverfahren nach Anspruch 3, beinhaltend ein periodisches Anzeigen des Störimpuls-Erfassungssignals während der Einspritzvorgänge.

5. Steuerungsverfahren nach einem der Ansprüche 1 bis 4, **dadurch gekennzeichnet, dass** das erste Ansteuerungsstromsignal (30, 130) zum Erzielen einer Bewegung des Überströmventils (20) in Richtung seines offenen Zustandes zu einem Zeitpunkt (t6) modifiziert wird, der zwischen 0,05 ms und 2 ms vor einem Zeitpunkt (t7) liegt, an dem das zweite Ansteuerungsstromsignal (40) modifiziert wird, um das Düsensteuerventil (22) dazu zu bringen, sich in Richtung seines geschlossenen Zustandes zu bewegen.

6. Steuerungsverfahren nach Anspruch 5, **dadurch gekennzeichnet, dass** das erste Ansteuerungsstromsignal (30, 130) zwischen 0,1 ms und 1 ms vor der Modifizierung des zweiten Ansteuerungsstromsignals (40) modifiziert wird.

7. Steuerungsverfahren nach einem der Ansprüche 1 bis 6, **dadurch gekennzeichnet, dass** das zweite Ansteuerungsstromsignal (40) eingeschaltet wird, um das Düsensteuerventil (22) in dessen offenen Zustand zu bewegen.

8. Steuerungsverfahren nach einem der Ansprüche 1 bis 6, **dadurch gekennzeichnet, dass** das zweite Ansteuerungsstromsignal (40) ausgeschaltet wird, um das Düsensteuerventil (22) in seinen offenen Zustand zu bewegen.

9. Steuerungsverfahren zur Abgabe einer Haupteinspritzung von Kraftstoff gefolgt von einer nach Nacheinspritzung von Kraftstoff, wobei das Verfahren umfasst:
eine Betätigung eines Überströmventils (20) und eines Düsensteuerventils (22), um die Haupteinspritzung von Kraftstoff zu beginnen,
ein Beenden der Haupteinspritzung von Kraftstoff durch (i) ein Betätigen des Überströmventils (20) zu einem ersten Zeitpunkt, um das Überströmventil (20) dazu zu bringen, sich in einen offenen Zustand zu bewegen, gefolgt von (ii) einem Betätigen eines Düsensteuerventils (22) zu einem zweiten Zeitpunkt, um das Düsensteuerventil (22) dazu zu bringen, sich in einen geschlossenen Zustand zu bewegen,
ein nachfolgendes Betätigen des Überströmventils (20) zu einem dritten Zeitpunkt, um das Überströmventil (20) dazu zu bringen, sich von seinem offenen Zustand in einen geschlossenen Zustand zu bewegen, und
ein Beginnen der Nacheinspritzung von Kraftstoff durch ein Betätigen des Düsensteuerventils (22), um dieses in einen offenen Zustand zu bewegen, wobei der Differenz zwischen dem ersten Zeitpunkt und dem dritten Zeitpunkt so ausgewählt wird, dass eine Nacheinspritzung von Kraftstoff zu einem verhältnismäßig hohen Druck geschaffen wird, um die Menge der Rauchgasemissionen zu verringern.

10. Steuerungsverfahren nach Anspruch 9, wobei das Überströmventil (20) durch ein Modifizieren eines Überströmventil-Ansteuerungsstromsignals (30) betätigt wird, um es zwischen seinem offenen und seinem geschlossenen Zustand zu bewegen.

11. Steuerungsverfahren nach Anspruch 10, **dadurch gekennzeichnet, dass** das relative Timing zwischen dem Öffnen und dem Schließen des Überströmventils (20) ausgewählt wird, um sicherzustellen, dass der Druck der Nacheinspritzung wenigstens 1770 bar beträgt.

12. Steuerungsverfahren nach Anspruch 11, **dadurch gekennzeichnet, dass** das relative Timing zwischen dem Öffnen und dem Schließen des Überströmventils (20) ausgewählt wird, um sicherzustellen, dass der Druck der Nacheinspritzung wenigstens 2000 bar beträgt.

## Revendications

1. Procédé de commande pour un système d'injection de carburant ayant une soupape de décharge (20), une soupape de commande de gicleur de carburant (22) et un pointeau de soupape (12) qui est engageable avec une portée afin de commander l'injection de carburant, le procédé comprenant :
l'application d'un premier signal de courant d'attaque (30 ; 130) à la soupape de décharge (20) pour passer la soupape de décharge (20) dans un état fermé et l'application d'un second signal de courant d'attaque (40) à la soupape de commande de gicleur de carburant (22) pour passer la soupape de commande de gicleur de carburant (22) dans un état ouvert, pour lever ainsi le pointeau de soupape (12) de la portée pour initier une injection principale de carburant, et
la modification du premier signal de courant d'attaque (30 ; 130) appliqué à la soupape de décharge (20) de façon à passer la soupape de décharge (20) de l'état fermé à un état ouvert pendant une période d'ouverture de la soupape de décharge suivie par la modification du second signal de courant d'attaque (40) appliqué à la soupape de commande de gicleur de carburant (22) pour passer la soupape de commande de gicleur de carburant (22) de l'état ouvert à un état fermé pendant la période d'ouverture de la soupape de décharge, de façon à pousser le pointeau de soupape (12) vers sa portée pour terminer l'injection principale de carburant.

2. Procédé de commande selon la revendication 1, comprenant l'extinction du premier signal de courant d'attaque (130) pour fournir une première impulsion d'actionnement (131) pour lancer la période d'ouverture de la soupape de décharge et l'allumage du premier signal de courant d'attaque (130) et puis l'éteindre à nouveau pour fournir une seconde impulsion d'actionnement (132) avant la fin de la période d'ouverture de la soupape de décharge.

3. Procédé de commande selon la revendication 2, comprenant la surveillance d'un signal de détection d'impulsion transitoire indiquant une ouverture de la soupape de décharge et la modification du premier signal de courant d'attaque (130) pour fournir la seconde impulsion d'actionnement (132) à un temps, relative à la fin de la période d'ouverture de la soupape de décharge, dépendant du signal de détection d'impulsion transitoire.

4. Procédé de commande selon la revendication 3, comprenant la surveillance dudit signal de détection d'impulsion transitoire de façon périodique pendant les événements d'injection.

5. Procédé de commande selon l'une quelconque des revendications 1 à 4, dans lequel le premier signal de courant d'attaque (30 ; 130) est modifié pour entraîner que la soupape de décharge (20) passe vers son état ouvert à un temps (t6) compris entre 0,05 et 2 millisecondes avant un temps (t7) auquel le second signal de courant d'attaque (40) est modifié pour entraîner que la soupape de commande de gicleur de carburant (22) passe vers son état fermé.

6. Procédé de commande selon la revendication 5, dans lequel le premier signal de courant d'attaque (30 ; 130) est modifié entre 0,1 et 1 milliseconde avant que le second signal de courant d'attaque (40) ne soit modifié.

7. Procédé de commande selon l'une quelconque des revendications 1 à 6, dans lequel le second signal de courant d'attaque (40) est allumé pour passer la soupape de commande de gicleur de carburant (22) dans son état ouvert.

8. Procédé de commande selon l'une quelconque des revendications 1 à 6, dans lequel le second signal de courant d'attaque (40) est éteint pour passer la soupape de commande de gicleur de carburant (22) vers son état ouvert.

9. Procédé de commande servant à distribuer une injection principale de carburant suivie pas une post injection de carburant, le procédé comprenant :
l'actionnement d'une soupape de décharge (20) et d'une soupape de commande de gicleur de carburant (22) pour lancer l'injection principale de carburant,
la fin de l'injection principale de carburant par l'actionnement (i) de la soupape de décharge (20) à un premier temps pour entraîner que la soupape de décharge (20) passe vers un état ouvert suivi par l'actionnement (ii) d'une soupape de commande de gicleur de carburant (22) à un second temps pour entraîner que la soupape de commande de gicleur de carburant (22) passe vers un état fermé,
par la suite l'actionnement de la soupape de décharge (20) à un troisième temps pour entraîner que la soupape de décharge (20) passe de son état ouvert vers un état fermé, et
le lancement de la post injection de carburant par l'actionnement de la soupape de commande de gicleur de carburant (22) pour passer dans un état ouvert, de telle manière que la différence entre la première et la troisième fois soit sélectionnée pour fournir une pression relativement élevée de post injection de carburant de façon à réduire les niveaux d'émissions de fumée.

10. Procédé de commande selon la revendication 9, dans lequel la soupape de décharge (20) est actionnée pour passer entre ses états ouverts et fermés par la modification du signal de courant d'attaque (30) de la soupape de décharge.

11. Procédé de commande selon la revendication 10, dans lequel le temps relatif entre l'ouverture et la fermeture de la soupape de décharge (20) est sélectionné pour s'assurer que la pression de post injection est au moins de 1700 bars.

12. Procédé de commande selon la revendication 11, dans lequel le temps relatif entre l'ouverture et la fermeture de la soupape de décharge (20) est sélectionné pour s'assurer que la pression de post injection est au moins de 2000 bars.
